# EUROPÄISCHE PATENTANMELDUNG

(11) **EP 0 844 791 A2**
(43) Veröffentlichungstag der Anmeldung: **27.05.1998**
(21) Anmeldenummer: 97440104.4
(22) Anmeldetag: 10.11.1997
(51) Int. Cl.: H04N 7/173, H04N 7/22

(54) **Aktiver Übergabepunkt eines Zugangsnetzes**

(30) Priorität: 20.11.1996 DE 19647944
(71) Anmelder: ALCATEL ALSTHOM COMPAGNIE GENERALE D'ELECTRICITE, 75008 Paris (FR)
(72) Erfinder: Krimmel, Heinz, 70825 Korntal-Münchingen (DE); Heidemann, Rolf, Dr., 71732 Tamm (DE); Fritschi, Rainer, 70825 Korntal-Münchingen (DE)
(74) Vertreter: Schätzle, Albin, Dipl.-Phys.

(57) **Zusammenfassung**

In einem hybriden Glasfaser-Koaxialkabel-Zugangsnetz NET mit Vorwärtskanal und Rückkanal dient der Rückkanal zur Übertragung von Sprach- und Videosignalen sowie Datensignalen von Gruppen von Endstellen ( END ) zu einer Unterzentrale ( HUB ). Der Übergabepunkt ( UP ) bildet die Schnittstelle zwischen dem Betreiber-Zugangsnetz ( NET ) und dem privaten Netz der Teilnehmerendstelle ( END). Der Übergabepunkt ( UP ) beinhaltet wenigstens zwei Einrichtungen ( BP4, BP5, BP6 ) zur frequenzmäßigen Aufteilung von empfangenen Signalen im Rückkanalfrequenzbereich, wenigstens zwei Schalter ( S4, S5, S6 ), die den wenigstens zwei Einrichtungen ( BP4, BP5, BP6 ) nachgeschaltet sind und zum Sperren oder Freischalten einzelner Rückkanalfrequenzbereiche dienen, eine Messeinheit ( MESS2 ) zum Messen der Amplituden oder der Intensitäten der Signale in den aufgeteilten Frequenzbereichen und eine Steuereinheit ( CTRL ) zur Auswertung der gemessenen Werte und zur Ansteuerung der wenigstens zwei Schalter ( S4, S5, S6 ). Für eine Endstelle ( END ) können einzelne Frequenzbereiche des Rückkanals damit telemetrisch, temporär gesperrt werden. Eine dezentrale und autarke Überwachung einzelner Rückkanalfrequenzbereiche erfolgt durch eine vom Übergabepunkt ( UP ) selbst angesteuerte Messeinheit.

## Beschreibung

Die Erfindung betrifft einen aktiven Übergabepunkt eines Zugangsnetzes gemäß Patentanspruch 1.

Ein Zugangsnetz ist beispielsweise ein Koaxialkabelnetz mit einem Vorwärtskanal und einem Rückkanal, über das verschiedene bidirektionale Dienste, wie beispielsweise Telefonie, Datenaustausch via Internet oder Bildtelefonie möglich sind.

In dem Buch "Ton- und Fernsehübertragungstechnik und Technik leitungsgebundener BK-Anlagen", Decker's Verlag, G. Schenck, Heidelberg 1988, ist auf Seite 294 ein Übergabepunkt beschrieben. Der Übergabepunkt bildet die Endeinrichtung eines Betreiber-Verteilnetzes und damit die Schnittstelle zu den privaten Teilnehmereinrichtungen. Mit ihm lassen sich Betreiber-Netz und private Hausverteilanlage zu Messzwecken bzw. zur Teilnehmersperrung voneinander trennen. Gemessen wird die Güte der Signale auf den Leitungen vom Teilnehmer und denen von einer Zentrale. Die Teilnehmersperrung erfolgt manuell. Bei der Teilnehmersperrung wird der gesamte zur Verfügung stehende Übertragungsbereich gesperrt. Der Teilnehmer kann während der Sperrung kein Signal zur Zentrale übertragen.

Es ist deshalb eine Aufgabe der Erfindung einen Übergabepunkt eines Zugangsnetzes zur Verfügung zu stellen, mittels dessen das Trennen und Freischalten eines Teilnehmer vereinfacht wird.

Es ist eine weitere Aufgabe der Erfindung Teilnehmersignale während und außerhalb einer Teilnehmersperrung zu überwachen.

Diese Aufgaben werden durch die Lehre des Patentanspruchs 1 gelöst. Vorteilhafte Ausgestaltungen sind den abhängigen Patentansprüchen 2 bis 9 zu entnehmen.

Ein besonderer Vorteil der Erfindung ist die dezentrale und autarke Überwachung einzelner Rückkanalfrequenzbereiche durch eine vom Übergabepunkt selbst angesteuerte Messeinheit.

Ein weiterer Vorteil der Erfindung ist, daß für einzelne Teilnehmer einzelne Frequenzbereiche des Rückkanals telemetrisch, temporär gesperrt werden können.

Des weiteren tritt bei der Anwendung der Erfindung ein Zeitgewinn beim Beheben von Störungen auf, hervorgerufen durch zeitkontinuierliche, eigenständige Messungen, Auswertung der Messungen und Entscheidungsfindung im Übergabepunkt.

Durch Anwendung der Erfindung kann ferner eine telemetrische Messwerterfassung und Überwachung des Zugangsnetzes sowie eine verkehraufkommenabhängige Rückkanalzuweisung erfolgen.

Im folgenden wird die Erfindung anhand zweier Ausführungsbeispiele unter Zuhilfenahme der Figuren 1 bis 3 erläutert. Es zeigen :
- Fig. 1: eine schematische Darstellung eines erfindungsgemäßen Zugangsnetzes mit einen Vorwärtskanal und einem Rückkanal,
- Fig. 2: eine schematische Darstellung eines erfindungsgemäßen aktiven Übergabepunktes des Zugangsnetzes aus Fig. 1 und
- Fig. 3: eine schematische Darstellung eines weiteren erfindungsgemäßen aktiven Übergabepunktes des Zugangsnetzes aus Fig. 1.

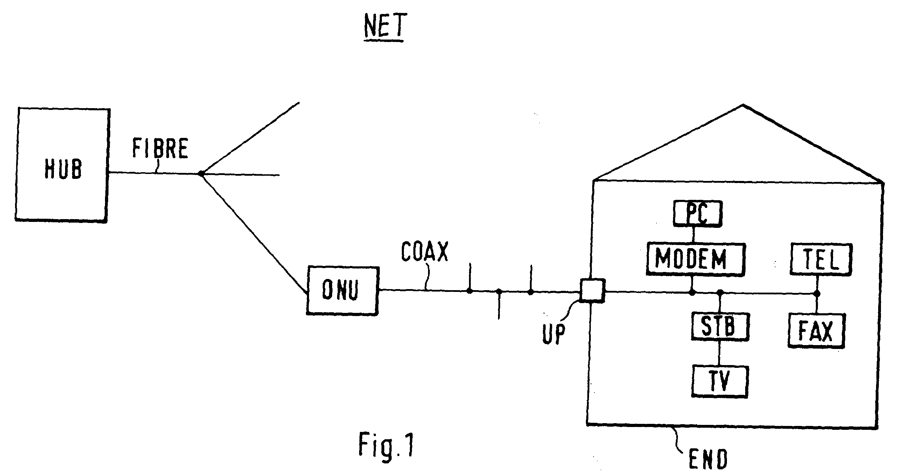

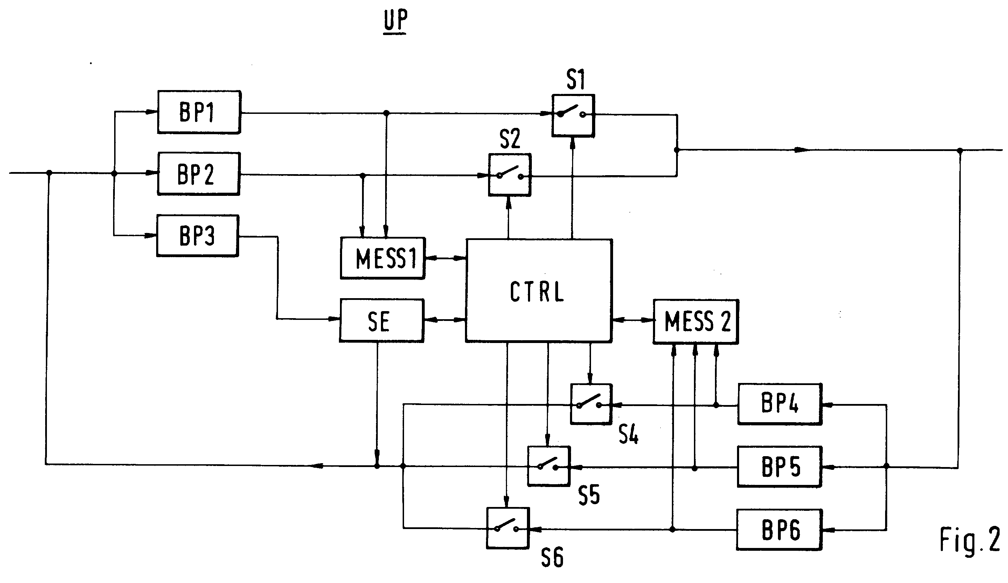

Das erste Ausführungsbeispiel wird nun unter Zuhilfenahme der Fig. 1 und 2 erläutert. Fig. 1 zeigt ein hybrides Glasfaser-Koaxialkabel-Zugangsnetz NET, das beispielsweise der Übertragung von analogen und digitalen Fernseh- und Videosignalen sowie Datensignalen von einer Unterzentrale HUB zu mehreren Endstellen END sowie der Übertragung von analogen und digitalen Sprach- und Videosignalen sowie Datensignalen von mehreren Endstellen END zur Unterzentrale HUB dient. Von den Endstellen END ist beispielhaft eine dargestellt. Die zu übertragenden Signale werden in der Unterzentrale HUB elektrisch/optisch E/O1 umgesetzt und über ein Verteilnetz aus optischen Leitungen, z.B. Glasfaserleitungen FIBRE, und optischen Splittern über den Vorwärtskanal zu mehreren optischen Netzabschlußeinheiten ONU, wovon eine dargestellt ist, übertragen. In jeder optischen Netzabschlußeinheit ONU findet eine optisch/elektrische Umsetzung der empfangenen Signale statt, die anschließend elektrisch über Koaxialkabel COAX zu mehreren Endstellen END übertragen werden. Die Videosignale sind beispielsweise von Teilnehmern interaktiv ausgewählte Spielfilme, Lernprogramme oder dergleichen. Die Auswahl der Videosignale sowie die Übertragung der Datensignale, z.B. für einen Internetzugang, erfolgt über den Rückkanal, dessen Frequenzbereich beispielsweise zwischen 5 MHz und 30 MHz liegt.

Zwischen Endstelle END und Koaxialkabel COAX ist ein Übergabepunkt UP angeordnet. Der Übergabepunkt UP bildet die Schnittstelle zwischen dem Zugangsnetz NET eines Netzbetreibers und der privaten Teilnehmerendstelle END. Der Übergabepunkt UP hat die Aufgabe, die von der Endstelle ausgesendeten Signale zu überwachen und im Falle einer Störung, beispielsweise ausgelöst durch ein Dauersignal eines Endgerätes, Teile oder den gesamten Frequenzbereich des Rückkanals zu sperren. Die Überwachung und Sperrung des Rückkanals erfolgt dezentral und autark durch eine vom Übergabepunkt selbst angesteuerte Messeinheit, eine Steuereinheit und mehreren Schaltern sowie Einrichtungen zur frequenzmäßigen Aufteilung des Rückkanalfrequenzbereichs. Messungen werden kontinuierlich, z.B. periodisch jede Sekunde, durchgeführt. Die Auswertung der Messungen und Entscheidungsfindung findet im Übergabepunkt statt. Des weiteren können im Übergabepunkt UP von der Unterzentrale HUB ausgesendetes Steuersignale empfangen und daraufhin Teile oder der gesamte Frequenzbereich des Vorwärtskanals sowie des Rückkanals gesperrt werden, z.B. bei unberechtigtem Zugriff des Teilnehmers, z.B. aufgrund einer nicht erfolgten Gebührenzahlung. Der Übergabepunkt UP beinhaltet dazu eine Sende/Empfangseinheit, die die Steuersignale empfängt und zur Steuereinheit weiterleitet. Von der Sende/Empfangseinheit können auch die aktuell gesperrten und freigeschalteten Frequenzbereiche sowohl diejenigen des Vorwärtskanals als auch diejenigen des Rückkanals zur Unterzentrale HUB übertragen werden, um die Unterzentrale HUB über den aktuellen Stand zu informieren, damit sie eine Übersicht über den Zustand des gesamten Zugangsnetzes hat und/oder ggf. eine Änderung vornehmen kann.

Die Endstelle END hat ein eigenes Hausnetz, auf das der Teilnehmer Zugriff hat und an das er zahlreiche Endgeräte anschließen kann. Die Endgeräte sind beispielsweise ein über ein Modem MODEM angeschlossener Computer PC, ein über eine Set-Top-Box STB angeschlossenes Fernsehgerät TV, ein Telefon TEL oder ein Faxgerät FAX.

Fig. 2 zeigt einen erfindungsgemäßen Übergabepunkt UP für das Zugangsnetz NET aus Fig. 1. Der Übergabepunkt UP beinhaltet wenigstens zwei Einrichtungen BP4, BP5, BP6 zur frequenzmäßigen Aufteilung von empfangenen Signalen im Rückkanalfrequenzbereich, wenigstens zwei Schalter S4, S5, S6, die den wenigstens zwei Einrichtungen BP4, BP5, BP6 nachgeschaltet sind und zum Sperren oder Freischalten einzelner Rückkanalfrequenzbereiche dienen, eine Messeinheit MESS2 zum Messen der Amplituden oder der Intensitäten der Signale in den aufgeteilten Frequenzbereichen und eine Steuereinheit CTRL zur Auswertung der gemessenen Werte und zur Ansteuerung der wenigstens zwei Schalter S4, S5, S6.

Die wenigstens zwei Einrichtungen BP4, BP5, BP6 sind im ersten Ausführungsbeispiel drei Bandpaßfilter mit unterschiedlichen Durchlaßbereichen, beispielsweise ist der Durchlaßbereich des Bandpaßfilters BP4 5-10 MHz, der Durchlaßbereich des Bandpaßfilters BP5 10-20 MHz und der Durchlaßbereich des Bandpaßfilters BP6 20-30 Mhz. Anstelle der Bandpaßfilter BP4, BP5, BP6 können beispielsweise auch Frequenzweichen oder Demultiplexer verwendet werden.

Die wenigstens zwei Schalter S4, S5, S6 sind im ersten Ausführungsbeispiel drei elektrische Schalter S4, S5, S6, die z.B. aus bistabilen Hochfrequenzrelais oder Halbleiterbauelementen aufgebaut sind.

Die Messeinheit MESS2 hat für jeden aufgeteilten Rückkanalfrequenzbereich einen Eingang. Die Eingänge sind jeweils mit den Ausgängen der Bandpaßfilter verbunden. Die Messeinheit MESS2 beinhaltet beispielsweise drei Amplitudendetektoren oder drei Intensitätsdetektoren, die die Amplituden bzw. die Intensitäten der Signale in den einzelnen Rückkanalfrequenzbereichen ermitteln. Die gemessenen Werte liegen beispielsweise in analoger Form vor. Zur Digitalisierung der gemessenen Werte beinhaltet die Meßeinheit MESS2 beispielsweise einen Analog/Digital Umsetzer und einen Speicher. Die gemessenen Werte werden im Speicher zwischengespeichert und im Zeitmultiplexverfahren im Analog/Digital Umsetzer digitalisiert und anschließend der Steuereinheit CTRL zugeführt. Die Meßeinheit MESS2 kann zur Umsetzung der gemessenen Werte auch drei Analog/Digital Umsetzer beinhalten, so daß die gemessenen Werte zeitgleich digitalisierbar sind und parallel zur Steuereinheit CTRL übertragbar sind.

Die Steuereinheit CTRL beinhaltet einen Speicher zur Abspeicherung von Sollwerten und einen digitalen Signalprozessor oder einen Mikroprozessor zum Vergleich der gemessenen, digitalisierten Werte mit den abgespeicherten Sollwerten. Die Sollwerte bilden z.B. eine minimale und eine maximale Schwelle, die von den empfangenen Signale nicht unter-bzw. überschritten werden darf. Liegt das Signal eines Endgeräts, z.B. das der Set-Top-Box STB aufgrund einer Störung im Gerät über der Schwelle, so wird durch die Steuereinheit CTRL der Frequenzbereich des Rückkanals, in dem die Set-Top-Box sendet durch Ansteuerung des jeweiligen Schalters S4, S5, S6 gesperrt. Der Frequenzbereich, der durch die Set-Top-Box STB nicht gestört wird, bleibt weiterhin freigeschaltet, so daß von der Endstelle END aus z.B. weiterhin telefoniert werden kann.

Der aktive Übergabepunkt UP beinhaltet ferner eine Sende/Empfangseinheit SE zur Übertragung von aktuellen Einstellungen der wenigstens zwei Schalter S4, S5, S6. Von der Sende/Empfangseinheit SE werden somit die aktuell gesperrten und freigeschalteten Frequenzbereiche des Rückkanals zur Unterzentrale HUB übertragen. Die Sende/Empfangseinheit SE beinhaltet dazu einen Modulator, der eine Trägerfrequenz generiert, die innerhalb des Rückkanalfrequenzbereichs liegt und noch nicht von den Signalen der Endstelle belegt ist, einen Speicher zum Abspeichern der Adresse des aktiven Übergabepunktes UP und einen Kodierer zur Kodierung der Adresse und der aktuellen Einstellungen. Die Kodierung erfolgt beispielsweise nach der Pulskodemodulation. Jeder Übergabepunkt UP des Zugangsnetzes überträgt seine aktuellen Einstellungen somit in Form von Telegrammen zur Unterzentrale HUB, z.B. nach dem Polling-Verfahren.

Die Sende/Empfangseinheit SE dient des weiteren zum Empfang von Fernsteuer-Einstellungen für die wenigstens zwei Schalter S4, S5, S6. Die Fernsteuer-Einstellungen werden von der Unterzentrale ausgesandt und über das Zugangsnetz NET zu den aktiven Übergabepunkten UP übertragen. Die Fernsteuer- Einstellungen werden beispielsweise aus der Überwachung der Gebührenzahlungen der Teilnehmer ermittelt. Zahlt ein Teilnehmer keine Gebühren für einen entsprechenden Dienst, z.B. die Berechtigung zur Teilnahme an dem interaktiven Dienst Video-auf-Abruf, so wird der Durchlaß im entsprechenden Frequenzbereich gesperrt.

Die Steuereinheit CTRL beinhaltet für jeden Schalter S4, S5, S6 ferner jeweils einen Vergleicher, zur Auswahl einer Schalterstellung aus der von der Sende/Empfangseinheit SE empfangenen Fernsteuer-Einstellung und dem Ergebnis der Auswertung des gemessenen Wertes für den jeweiligen Schalter S4, S5, S6. Der Vergleicher ist beispielsweise ien UND-Gatter mit zwei Eingängen und einem Ausgang. Dem einen Eingang werden die empfangenen Fernsteuer-Einstellungen für den jeweiligen Schalter S4, S5, S6 und dem anderen Eingang die Ergebnisse der Auswertung der gemessenen Werte zugeführt. Der Ausgang des des UND-Gatters ist mit dem Steuereingang des jeweiligen Schalters S4, S5, S6 verbunden. Damit erfolgt eine Auswahl zwischen den empfangenen und den aus der Messung ermittelten Einstellungen. Bedeutet eine der Einstellungen "Sperren", so wird der jeweilige Schalter geöffnet, so daß der jeweilige Frequenzbereich gesperrt ist. Bedeuten beide Einstellungen "Sperren", so wird der jeweilige Schalter ebenfalls geöffnet. Nur für den Fall, daß beide Einstellungen "Freischalten" bedeuten, wird der entsprechende Schalter geschlossen, so daß der entsprechende Frequenzbereich durchgeschaltet ist.

Der aktive Übergabepunkt UP beinhaltet wenigstens zwei weitere Einrichtungen BP1, BP2, BP3 zur frequenzmäßigen Aufteilung von empfangenen Signalen im Frequenzbereich des Vorwärtskanals, wenigstens zwei weitere Schalter S1, S2, die den wenigstens zwei weiteren Einrichtungen BP1, BP2, BP3 nachgeschaltet sind und zum Sperren oder Freischalten einzelner Vorwärtskanalfrequenzbereiche dienen und eine weitere Messeinheit MESS1 zum Messen der Amplituden oder der Intensitäten der Signale in den aufgeteilten Frequenzbereichen des Vorwärtskanals.

Die wenigstens zwei weitere Einrichtungen BP1, BP2, BP3 sind im Ausführungsbeispiel drei Bandpaßfilter mit unterschiedlichen Durchlaßbereichen, beispielsweise ist der Durchlaßbereich des Bandpaßfilters BP3 45-60 MHz, der Durchlaßbereich des Bandpaßfilters BP2 100-450 MHz und der Durchlaßbereich des Bandpaßfilters BP1 450-800 MHz. Anstelle der Bandpaßfilter BP3, BP2, BP1 können beispielsweise auch Frequenzweichen oder Demultiplexer verwendet werden. Der Durchlaßbereich des Bandpaßfilters BP3 dient beispielsweise zur Übertragung von Steuersignalen, der Durchlaßbereich des Bandpaßfilters BP2 zur Übertragung von analogen Fernsehsignalen und der Durchlaßbereich des Bandpaßfilters BP1 zur Übertragung von digitalen Fernsehsignalen und von Daten.

Die Steuereinheit CTRL dient ferner zur Auswertung der in der weiteren Messeinheit MESS1 gemessenen Werte und zur Ansteuerung der wenigstens zwei Schalter S1, S2.

Die weiteren Schalter S1, S2 entsprechen von ihrem Aufbau und ihrer Funktion den Schaltern S4, S5, S6, jedoch bezogen auf den Vorwärtskanal und nicht den Rückkanal.

Die weitere Messeinheit MESS1 entspricht in ihrem Aufbau und ihrer Funktion der Messeinheit MESS2, jedoch bezogen auf den Vorwärtskanal und nicht den Rückkanal.

Ebenso wie für den Rückkanal dient die Sende/Empfangseinheit SE auch zum Empfang von Fernsteuer-Einstellungen für die wenigstens zwei weiteren Schalter S1, S2. Die Fernsteuer-Einstellungen werden von der Unterzentrale ausgesandt und über das Zugangsnetz NET zu den aktiven Übergabepunkten UP übertragen. Die Auswahl zwischen den empfangenen und den aus der Messung ermittelten Einstellungen kann vergleichbar zur Auswahl beim Rückkanal über ein UND-Gatter erfolgen.

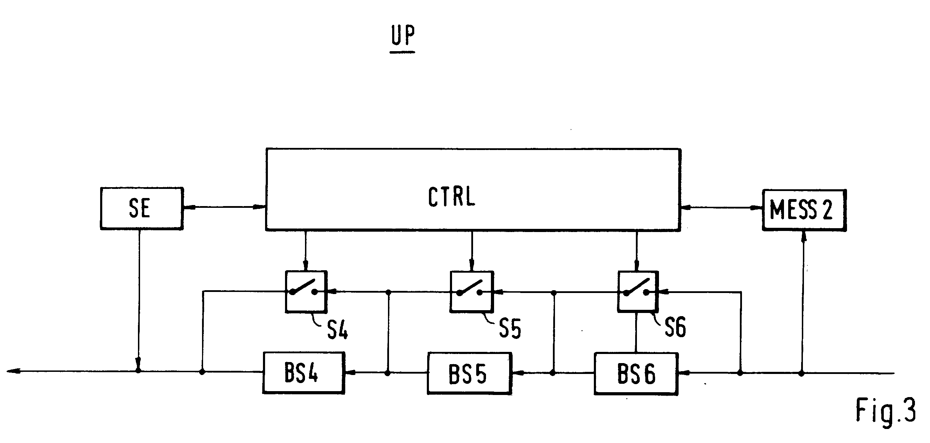

Das zweite Ausführungsbeispiel wird nun weiter unter Zuhilfenahme der Fig. 3 erläutert. Fig. 3 zeigt einen erfindungsgemäßen Übergabepunkt UP für das Zugangsnetz NET aus Fig. 1. Der Übergabepunkt UP beinhaltet eine Steuereinheit CTRL, eine Messeinheit MESS2 und eine Sende/Empfangseinheit SE, die bezüglich der Signalübertragung im Rückkanal im wesentlichen diegleiche Funktion wahrnehmen, wie die gleichnamigen Elemente aus Fig. 2. Der Übergabepunkt UP beinhaltet ferner wenigstens zwei Einrichtungen BS4, BS5, BS6 zur frequenzmäßigen Aufteilung von empfangenen Signalen im Rückkanalfrequenzbereich und weingstens zwei Schalter S4, S5, S6 zum Sperren oder Freischalten einzelner Frequenzbereiche.

Die wenigstens zwei Einrichtungen BS4, BS5, BS6 sind im zweiten Ausführungsbeispiel drei Bandsperren mit unterschiedlichen Sperrbereichen, beispielsweise ist der Sperrbereich der Bandsperre BS4 5-10 MHz, der Sperrbereich der Bandsperre BS5 10-20 MHz und der Sperrbereich der Bandsperre BS6 20-30 MHz.

Die wenigstens zwei Schalter S4, S5, S6 sind im zweiten Ausführungsbeispiel drei elektrische Schalter S4, S5, S6, die z.B. aus bistabilen Hochfrequenzrelais oder Halbleiterbauelementen aufgebaut sind.

Die drei Bandsperren BS4, BS5, BS6 mit den drei Schaltern S4, S5, S6 können alternativ zu den Bandpaßfiltern aus Fig. 2 verwendet werden. Die Parallelschaltung der Bandpaßfilter mit ihren nachgeschalteten Schaltern wird durch eine Serienschaltung der Bandsperren BS4, BS5, BS6 mit parallel geschalteten Schaltern S4, S5, S6 ersetzt. Auf diese Weise erfüllen beide Schaltungvarianten dieselbe Funktion. Mit den Bandsperren BS4, BS5, BS6 werden die ungewünschten Frequenzbereiche ausgeblendet, mit den Bandpässen die gewünschten Frequenzbereiche durchgeschalten. Bei der Verwendung der Bandsperren BS4, BS5, BS6 müssen deshalb bei einer Freischaltung des gesamten Rückkanalfrequenzbereichs alle Schalter geschlossen sein. Sollen die Frequenzbereiche 5-20 Mhz ausgeblendet, d.h. gesperrt werden, so sind die Schalter S4 und S5 zu öffnen und der Schalter S6 zu schließen.

Die Messseinheit MESS2 beinhaltet beispielsweis einene Tuner mit einstellbarem Fequenzbereich oder einen sog. Spectrumanalyzer mittels dessen der gesamte Frequenzbereich des Rückkanals durchfahren werden kann und dabei die Amplitude und/oder die Intensität der gemessenen Signale bestimmt werden kann.

Das Ersetzen der Bandpässe durch die Bandsperren ist nur für den Rückkanal dargestellt. Ebenso können die Bandpässe für den Vorwärtskanal auf vergleichbare Art und Weise durch Bandsperren ersetzt werden. Alle Ausführungsformen und Varianten des Übergabepunktes aus Fig. 2 können auch auf den Übergabepunkt UP aus Fig. 3 entsprechend angewendet werden.

Im ersten Ausführungsbeispiel ist ein hybrides Zugangsnetz NET beschrieben. Anstelle bei einem hybriden Zugangsnetz NET, kann die Erfindung auch in einem rein elektrischen oder einem rein optischen Zugangsnetz angewendet werden. Der Übergabepunkt UP für ein rein optisches Zugangsnetz enthält beispielsweise wellenlängenabhängige Koppler oder optische Filter anstelle von Bandpässen BP1-BP6 zur frequenzmäßigen Aufteilung von Signalen im Rückkanalfrequenzbereich und elektrisch ansteuerbare optische Schalter anstelle elektrischer Schalter S1,S2,S4-S6 zum Sperren oder Freischalten einzelner Rückkanalfrequenzbereiche. Jede Messeinheit MESS1, MESS2 enthält beispielsweise eine Photodiode zur Ermittlung der Intensitäten der Signale im Rückkanalfrequenzbereich. Die Steuereinheit CTRL kann weiterhin ein digitaler Signalprozessor sein.

## Patentansprüche

1. Aktiver Übergabepunkt (UP) eines Zugangsnetzes (NET) mit einem Vorwärtskanal und einem Rückkanal zur bidirektionalen Übertragung von Signalen, mit
- wenigstens zwei Einrichtungen (BP4, BP5, BP6, BS4, BS5, BS6) zur frequenzmäßigen Aufteilung von empfangenen Signalen im Rückka nalfrequenzbereich,
- wenigstens zwei Schaltern (S4, S5, S6), die mit den wenigstens zwei Einrichtungen (BP4, BP5, BP6, BS4, BS5, BS6) vergeschaltet sind und zum Sperren oder Freischalten einzelner Rückkanalfrequenzbereiche dienen,
- einer Messeinheit (MESS2) zum Messen der Amplituden oder der Intensitäten der Signale in den aufgeteilten Frequenzbereichen und
- einer Steuereinheit (CTRL) zur Auswertung der gemessenen Werte und zur Ansteuerung der wenigstens zwei Schalter (S4, S5, S6).

2. Aktiver Übergabepunkt (UP) nach Anspruch 1, dadurch gekennzeichnet, daß der aktive Übergabepunkt (UP) eine Sende/Empfangseinheit (SE) zur Übertragung von aktuellen Einstellungen der wenigstens zwei Schalter (S4, S5, S6) beinhaltet.

3. Aktiver Übergabepunkt (UP) nach Anspruch 1, dadurch gekennzeichnet, daß der aktive Übergabepunkt (UP) eine Sende/Empfangseinheit (SE) zum Empfang von Fernsteuer-Einstellungen für die wenigstens zwei Schalter (S4, S5, S6) beinhaltet.

4. Aktiver Übergabepunkt (UP) nach Anspruch 1, dadurch gekennzeichnet, daß der aktive Übergabepunkt (UP) wenigstens zwei weitere Einrichtungen (BP1, BP2, BP3 ) zur frequenzmäßigen Aufteilung von empfangenen Signalen im Frequenzbereich des Vorwärtskanals, wenigstens zwei weitere Schalter (S1, S2), die den wenigstens zwei weiteren Einrichtungen (BP1, BP2, BP3) nachgeschaltet sind und zum Sperren oder Freischalten einzelner Vorwärtskanalfrequenzbereiche dienen und eine weitere Messeinheit (MESS1) zum Messen der Amplituden oder der Intensitäten der Signale in den aufgeteilten Frequenzbereichen des Vorwärtskanals beinhaltet, und daß die Steuereinheit (CTRL) zur Auswertung der in der weiteren Messeinheit ( MESS1 ) gemessenen Werte und zur Ansteuerung der wenigstens zwei weiteren Schalter (S1, S2) dient.

5. Aktiver Übergabepunkt (UP) nach Anspruch 4, dadurch gekennzeichnet, daß die Sende/Empfangseinheit (SE) zum Empfang von Fernsteuer-Einstellungen für die wenigstens zwei weiteren Schalter (S1, S2) dient.

6. Aktiver Übergabepunkt (UP) nach Anspruch 1, dadurch gekennzeichnet, daß die wenigstens zwei Einrichtungen (BP4, BP5, BP6, BS4, BS5, BS6) Bandpaßfilter (BP4, BP5, BP6) mit unterschiedlichen Durchlaßbereichen sind, und daß jeweils ein Schalter (S4, S5, S6) und ein Bandpaßfilter (BP4, BP5, BP6) in Reihe geschaltet sind.

7. Aktiver Übergabepunkt (UP) nach Anspruch 1, dadurch gekennzeichnet, daß die wenigstens zwei Einrichtungen (BP4, BP5, BP6, BS4, BS5, BS6 ) Bandsperren (BS4, BS5, BS6) mit unterschiedlichen Sperrbereichen sind, und daß jeweils ein Schalter (S4, S5, S6) und eine Bandsperre (BS4, BS5, BS6) parallel geschaltet sind.

8. Aktiver Übergabepunkt (UP) nach Anspruch 1, dadurch gekennzeichnet, daß die Messeinheit (MESS2) wenigstens einen Analog/Digital Umsetzer zur Umsetzung der gemessenen Werte beinhaltet, und daß die Steuereinheit (CTRL) einen Speicher zur Abspeicherung von Sollwerten und einen digitalen Signalprozessor zum Vergleich der gemessenen, digitalisierten Werte mit den abgespeicherten Sollwerten beinhaltet.

9. Aktiver Übergabepunkt (UP) nach Anspruch 3, dadurch gekennzeichnet, daß die Steuereinheit (CTRL) für jeden Schalter (S4, S5, S6) jeweils einen Vergleicher beinhaltet, zur Auswahl einer Schalterstellung aus der von der Sende/Empfangseinheit (SE) empfangenen Fernsteuer-Einstellung und dem Ergebnis der Auswertung des gemessenen Wertes für den jeweiligen Schalter (S4, S5, S6).
